# EUROPÄISCHE PATENTSCHRIFT

(11) **EP 0 805 784 B1**
(45) Veröffentlichungstag und Bekanntmachung des Hinweises auf die Patenterteilung: **12.08.1998**
(21) Anmeldenummer: 96900193.2
(22) Anmeldetag: 17.01.1996
(51) Int. Cl.: C03B 33/02

(54) **VERFAHREN ZUM TEILEN VON GLASTAFELN IN ZUSCHNITTE**
PROCESS FOR DIVIDING GLASS PANES INTO SECTIONS
PROCEDE DE DIVISION DE PANNEAUX DE VERRE EN PLAQUES INDIVIDUELLES

(30) Priorität: 24.01.1995 AT 118/95
(43) Veröffentlichungstag der Anmeldung: 12.11.1997
(73) Patentinhaber: Lisec, Peter, 3363 Amstetten-Hausmening (AT)
(72) Erfinder: Lisec, Peter, 3363 Amstetten-Hausmening (AT)
(74) Vertreter: Beer, Manfred, Dipl.-Ing.
(86) Internationale Anmeldenummer: AT9600004
(87) Internationale Veröffentlichungsnummer: WO9622948

(56) Entgegenhaltungen:
- EP-A- 0 457 751
- EP-A- 0 564 758
- FR-A- 2 574 392
- US-A- 4 871 104

## Beschreibung

Die Erfindung betrifft ein Verfahren zum Teilen von Glastafeln in Zuschnitte, bei dem die Glastafeln entsprechend den zu erzeugenden Zuschnitten geritzt und dann gebrochen werden.

Weiters betrifft die Erfindung eine Vorrichtung zum Teilen von Glastafeln in Zuschnitte, mit einer Station zum Ritzen von Glastafeln, welche Station eine im wesentlichen vertikal ausgerichtete Stützfläche mit einem Förderer am unteren Rand derselben und einen entlang der Stützfläche verstellbaren Schneidkopf aufweist, und mit Stationen zum Brechen der Glastafeln entlang der vorher erzeugten Ritzlinien (X, Y) in Zuschnitte.

Bei den bekannten Verfahren zum Teilen von Glastafeln in Zuschnitte werden Glasschneidetische und Brechtische verwendet, auf welchen die Glastafeln horizontal liegend geritzt und gebrochen werden. In diesem Zusammenhang wird als Beispiel auf die EP-A-457 751 und die EP-A-564 758 verwiesen.

Ein Nachteil bei diesen bekannten Vorrichtungen zum Teilen von Glastafeln ist es, daß sie nicht nur viel Platz benötigen, sondern daß die Glastafeln, die in einem Lager im wesentlichen vertikal stehend gestapelt sind, in eine horizontale Lage umgelegt und dann auf den Glasschneidetisch transportiert werden müssen. Die schlußendlich erhaltenen Zuschnitte müssen wieder in eine vertikale Lage aufgerichtet werden, bevor sie einer weiteren Bearbeitung oder einem Zwischenlager (Fächerwagen u. dgl.) zugeführt werden.

Somit zeichnen sich die bekannten Vorrichtungen durch großen Platzbedarf aus und die bekannte Arbeitsweise erfordert das Umlegen der Glastafeln und das Wiederaufrichten der erhaltenen Zuschnitte.

Aus der US-A-4 871 104 ist es bekannt, Glastafeln zu ritzen und zu brechen, während sie im wesentlichen vertikal stehend ausgerichtet sind. Hiezu weist die in der US-A-4 871 104 gezeigte Vorrichtung eine Stützvorrichtung für die zu teilende Glastafel einen Schneidkopf, der entlang der Stützeinrichtung vertikal auf und ab verschiebbar ist und eine Brecheinrichtung im Bereich der Schneideinrichtung auf. Nachteilig bei der aus der US-A-4 871 104 bekannten Vorrichtung ist es, daß diese ausschließlich dazu geeignet ist, Glastafeln in Streifen entlang zueinander paralleler Schnittlinien zu unterteilen.

Der Erfindung liegt die Aufgabe zugrunde, ein Verfahren zum Teilen von Glastafeln und eine insbesondere zu dessen Durchführung geeignete Vorrichtung vorzuschlagen, mit der Platz gespart und aufwendige Handhabungen der Glastafeln und Zuschnitte vermieden werden.

Erfindungsgemäß wird diese Aufgabe mit dem Verfahren des Anspruches 1 gelöst.

Die erfindungsgemäße, auch zur Durchführung des erfindungsgemäßen Verfahrens geeignete Vorrichtung ist dadurch gekennzeichnet, daß die Stationen zum Brechen der Glastafeln bezogen auf die Förderrichtung (Pfeil 26) der Glastafeln durch die Vorrichtung nach der Station zum Ritzen von Glastafeln angeordnet sind und daß zwischen der wenigstens einen ersten Brechstation und der nachfolgenden Brechstation eine Vorrichtung zum Schwenken von Teilen von Glastafeln um 90° vorgesehen ist.

Bevorzugte und vorteilhafte Ausgestaltungen des erfindungsgemäßen Verfahrens und bevorzugte und vorteilhafte Ausführungsformen der erfindungsgemäßen Vorrichtung sind Gegenstand der Unteransprüche.

Mit dem erfindungsgemäßen Verfahren und der erfindungsgemäßen Vorrichtung werden die Glastafeln im wesentlichen lotrecht stehend (in der Praxis um etwa 5 bis 7° nach hinten geneigt) an einer Stützfläche lehnend geritzt und dann zu den Brechstationen transportiert. Dadurch ergibt sich eine geringe Stellfläche der erfindungsgemäßen Vorrichtung und es ist nicht mehr erforderlich, die Glastafeln nachdem sie einem Lager entnommen worden sind, in die horizontale Lage umzulegen und die schlußendlich erhaltenen Zuschnitte wieder in die im wesentlichen vertikale Lage aufzurichten, um sie beispielsweise einer Isolierglasfertigungslinie oder einem Zwischenlager zuzuführen.

Weitere Einzelheiten, Merkmale und Vorteile des erfindungsgemäßen Verfahrens und der erfindungsgemäßen Vorrichtung ergeben sich aus der nachstehenden Beschreibung, in der auf die angeschlossenen Zeichnungen Bezug genommen ist. Es zeigt: Fig. 1 eine Glastafel mit Ritzlinien, Fig. 2 schematisch und in Ansicht eine Vorrichtung zum Teilen von Glastafeln in Zuschnitte, Fig. 3 eine in der Vorrichtung verwendbare Brecheinrichtung (bekannt aus der EP-A-457 751) und Fig. 4 eine Ausführungsform eines Brechwerkzeuges (bekannt aus der EP-A-564 758).

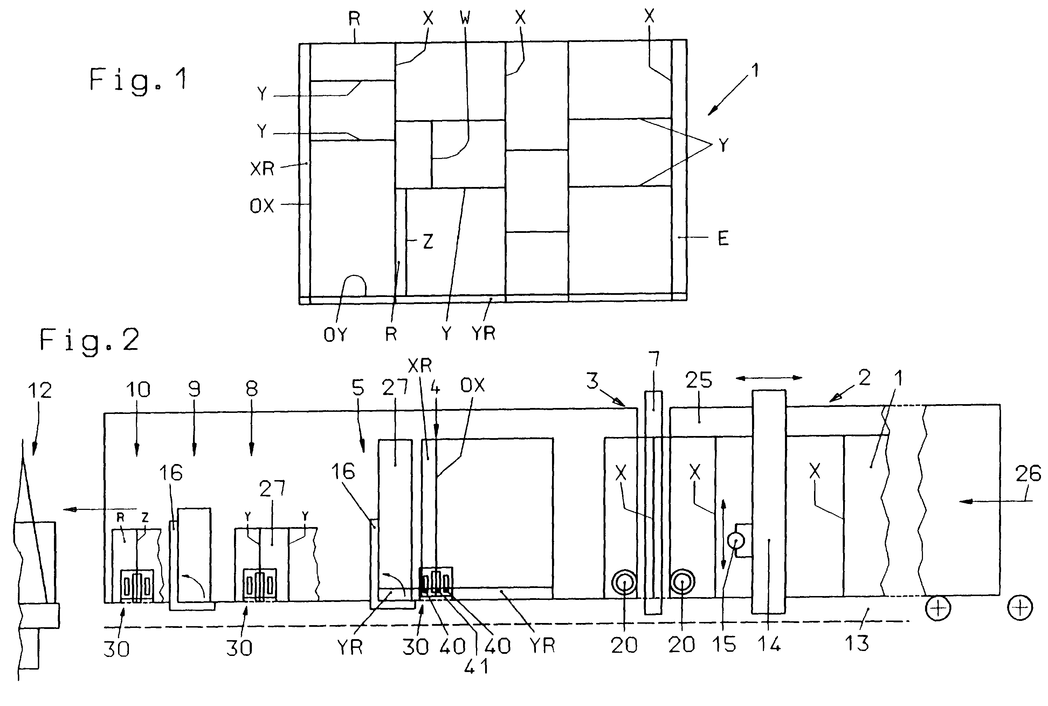

Da in der nachstehenden Beschreibung auf verschiedene Ritzlinien, Teile und Zuschnitte von Glastafeln Bezug genommen wird, werden diese zunächst an Hand von Fig. 1 erläutert.

Eine Glastafel 1, wie sie in Fig. 1 gezeigt ist, weist durch ein Schneidwerkzeug (Schneidrädchen) erzeugte Ritzlinien auf. Dabei handelt es sich um X-Schnitte, das sind parallel zu den Schmalrändern der Glastafel 1 über deren gesamte Breite durchgehende Ritzlinien, um Y-Schnitte, das sind parallel zur Längserstreckung der Glastafel 1 laufende Ritzlinien, die zwischen X-Schnitten verlaufen, weiters um W-Schnitte, die zwischen zwei Y-Schnitten verlaufen und schließlich um Z-Schnitte, die parallel zu den X-Schnitten zwischen zwei Y-Schnitten verlaufen.

Weiters sind zwei Null-Schnitte, nämlich der OX-Schnitt und der OY-Schnitt vorgesehen, außerhalb welcher Randstreifen XR und YR vorliegen. Schließlich finden sich als Zuschnitte nicht brauchbare Reste, die als Reststücke R bzw. Endstücke E bezeichnet werden.

Es ist noch darauf hinzuweisen, daß es in der Glaserbranche üblich ist, von Rand zu Rand einer Glastafel oder eines Teiles einer solchen durchgehende Schnitte als "Traveren", beispielsweise X-Traveren, zu bezeichnen.

In der folgenden Beschreibung werden als "Teile" von Glastafeln 1 Glasstücke bezeichnet, die durch Brechen entlang der X-Traveren aus der Glastafel 1 hergestellt worden sind, wobei der erste Teil auch noch einen Randreifen XR aufweist.

Die Vorrichtung zum Teilen von Glastafeln 1 umfaßt eine im wesentlichen lotrechte Stützwand 25, die als Rollenwand oder als Luftkissenwand ausgebildet sein kann, und die um 5 bis 7° geneigt ist. Am unteren Rand der Stützwand 25 ist eine Fördereinrichtung 13, im Ausführungsbeispiel gebildet aus drehangetriebenen Rollen, vorgesehen, welche Glastafeln 1, Teile und Zuschnitte von unter her abstützt und in Richtung des Pfeiles 26 von Station zu Station bewegt.

In der Vorrichtung ist im gezeigten Ausführungsbeispiel eine Schneidestation 2 vorgesehen, in der eine Glastafel 1 mit Hilfe eines Schneidwerkzeuges 15 entsprechend dem vorgegebenen, beispielsweise durch ein Computerprogramm optimierten Muster mit Ritzlinien versehen wird. Das Schneidwerkzeug 15 ist auf einem Schneidbalken 14, der entlang der Stützfläche 25 in der Schneidstation 2 verschiebbar ist, verfahrbar.

Im Anschluß an die Schneidstation 2 ist eine erste Brechstation 3 und im Anschluß an diese eine weitere Brechstation 4 vorgesehen. Die erste Brechstation 3 dient zum Öffnen der X-Schnitte und die zweite Brechstation 4 zum Abbrechen des Randstreifens XR entlang des OX-Schnittes.

Nach der zweiten Brechstation 4 ist eine Wendestation 5 vorgesehen, um Teile 27 von Glastafeln 1 um eine zur Stützwand 25 normal ausgerichtete Achse in die im Bereich der dritten Brechstation 8 gezeigte Lage zu schwenken. In dieser Lage verlaufen die Y-Schnitte von oben nach unten.

In der dritten Brechstation 8 werden die Y-Schnitte geöffnet. Falls in dem dann vorliegenden Teil der Glastafel 1 noch eine Schnittlinie (Z-Schnitt oder W-Schnitt) vorliegt, wird dieser Teil in der zweiten Wendestation 9 gedreht und der Z- oder W-Schnitt in der letzten Brechstation 10 geöffnet.

Am abgabeseitigen Ende der erfindungsgemäßen Vorrichtung ist eine Glasstapelvorrichtung 12, z.B. ein Fächerwagen vorgesehen. Fächerwagen, die verwendet werden können, sind beispielsweise in der EP-A 477 163 und der EP-A 603 151 gezeigt.

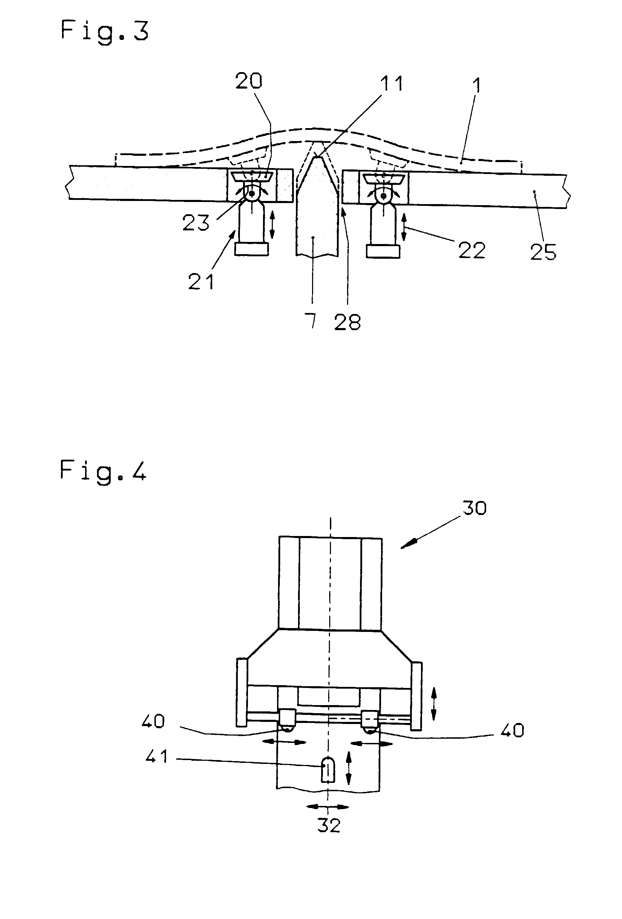

Die Ausführung der Brechstationen bzw. der in ihnen vorgesehenen Brecheinrichtungen und Brechwerkzeugen ist für die Erfindung nicht in erster Linie wesentlich. Die nachstehend an Hand der Fig. 3 und 4 beschriebenen Beispiele sind daher nur bevorzugte Ausführungsformen.

Die erste Brechstation 3, in der eine Glastafel 1 in Teile 27 geteilt wird, indem sie entlang der X-Schnitte gebrochen wird, besitzt eine Brechleiste 7 und im Ausführungsbeispiel als Niederhalter zwei Sauger 20, wobei die nähere Konstruktion beispielhaft in Fig. 3 gezeigt ist. Diese Ausführungsform kann auch in den Brechstationen 8 und 10 verwendet werden.

Die Brechleiste 7 ist in einem Spalt 28 in der Stützwand 25 senkrecht zu dieser verstellbar vorgesehen.

Die zu teilende Glasscheibe 1 wird so herangefördert, daß ein X-Schnitt vor der Brechleiste 7 zu stehen kommt. Zur Ausführung des Brechvorganges wird die Brechleiste 7 von Druckmittelzylindern od.dgl. in die in Fig. 3 strichliert eingezeichnete Stellung vorgeschoben.

Um die Glasscheibe 1 während des Brechvorganges zu biegen, d.h. auf die Stützwand 25 hin zu belasten, sind beidseits des Spaltes 28 für die Brechleiste 7 mit Unterdruck beaufschlagbare Sauger 20 vorgesehen, die mit ihren Betätigungsvorrichtungen 21 gelenkig verbunden sind, so daß sie nicht nur in Richtung der Pfeile 22 verstellbar, sondern auch um parallel zur Brechleiste 7 ausgerichtete Achsen in Richtung der Doppelpfeile 23 verschwenkbar sind. Dadurch können sich die Sauger 20, wie dies in Fig. 3 strichliert bzw. punktiert angedeutet ist, während des Brechvorganges schräg stellen und haften so sicher an der Unterseite der Glasscheibe 1 an, so daß diese mit der entsprechenden Kraft auf die Stützwand 25 hingezogen wird.

Die Brechleiste 7 kann auch so bewegt werden, daß ihr im Bereich der Sauger 20 liegendes Ende zuerst vorgeschoben wird, so daß sich der X-Schnitt von unten nach oben zu einem Bruch öffnet.

Der erste, durch Brechen der Glastafel 1 entlang deren in Förderrichtung (Pfeil 26) vordersten X-Travere enthaltene Teil 27 weist noch den Randstreifen XR auf. Dieser wird entlang des OX-Schnittes in der zweiten Brechstation 4 abgebrochen. Die zweite Brechstation 4 kann beispielsweise ein Brechwerkzeug 30 mit einer in Fig. 4 gezeigten Ausführungsform besitzen. In der Brechstation 4 kann - soferne vorhanden - ein Randstreifen E entlang der bezogen auf die Förderrichtung letzten X-Travere von einem Teil 27 der Glastafel 1 abgetrennt werden.

Die Brechstation 8 dient zum Brechen von Teilen 27 von Glastafeln 1 entlang der Y-Traveren im Zuschnitte und zum Abtrennen von Randstreifen YR (diese liegen außerhalb des OY-Schnittes (Y-Nullschnittes) von den jeweils letzten Zuschnitten.

Das in Fig. 4 gezeigte Beispiel für ein Brechwerkzeug 30, das in den Brechstationen 3, 4, 8 und 10 eingesetzt werden kann, besitzt zwei heb- und senkbare, von einer Seite her an die zu teilende Glastafel 1 oder einen Teil 27 derselben anlegbare Niederhalter 40 und ein von der anderen Seite, z.B. von der Stützwand 25 her im Bereich des OX-Schnittes oder eines anderen Schnittes, z.B. eines Y-Schnittes anlegbares Widerlager 41. Sowohl die Niederhalter 40 als auch das Widerlager 41 sind beispielsweise als (teil-)zylinderförmige Kunststoffleisten ausgebildet, die mit einer Erzeugenden an der dem Teil 27 oder der Glastafel 1 anliegen.

Der Abstand der Niederhalter 40 voneinander ist veränderbar, so daß die auf den Teil 27 oder die Glastafel 1 einwirkenden Kräfte verändert werden können. Dabei wird bei dickerem Glas der Abstand der Niederhalter 40 voneinander größer gewählt als bei dünnerem Glas.

Beim Brechen von Teilen 27 oder von Glastafeln 1 mit Hilfe des Brechwerkzeuges 30 kann das Widerlager 41 vor die Vorderseite der Stützwand 25 vorgeschoben werden, um so einen sicheren Verlauf des Bruches beispielsweise entlang des OX-Schnittes zu erzielen. Das Ausmaß des Vorschiebens des Widerlagers 41 vor die Vorderseite der Stützwand 25 wird abhängig von der Glasdicke gewählt. Dabei wird bei dickerem Glas weniger weit vorgeschoben als bei dünnerem Glas.

Die Wendestationen 5 und 9 besitzen jeweils einen Wendegreifer 16, der um eine im Bereich der Fördervorrichtung 13, insbesondere deren Oberkante (gebildet aus mehreren drehangetriebenen Förderrollen) liegende Achse im Sinne der eingezeichneten Pfeile verschwenkbar ist, um einen Teil 27 aus der Stellung, die er in den Brechstationen 4 und 5 einnimmt, in die in der Brechstation 8 gezeigte "liegende" Stellung zu schwenken. Der Wendegreifer 16 kann mit beliebig ausgebildeten Greifwerkzeugen ausgestattet sein. Bevorzugt sind Sauger, die an den Armen der Wendegreifer 16 angeordnet sind und an der von der Stützwand 25 abgekehrten Fläche von Teilen oder Zuschnitten angreifen, um diese um 90° zu wenden.

Die im Anschluß an die Brechstation 8 vorgesehene, weitere Wendestation 9 dient dazu, die erhaltenen Zuschnitte so zu drehen, daß ihre längere Erstreckung in Förderrichtung (Pfeil 26) liegt, bevor sie in die Stapelvorrichtung 12 eingeschoben werden.

Falls in den nach der Brechstation 8 erhaltenen Teilen von Glastafeln noch Z- oder W-Schnitte vorhanden sind, wie dies in Fig. 2 entlang eines Stückes gezeigt ist, werden diese in der Brechstation 10 mit Hilfe des Brechwerkzeuges 30 geöffnet, d.h. beispielsweise ein Reststück R vom Zuschnitt abgetrennt.

Zusammenfassend kann die Erfindung beispielsweise wie folgt dargestellt werden:

Glastafeln werden entsprechend den zu erzeugenden Zuschnitten geritzt und dann in Zuschnitte gebrochen, während sie im wesentlichen vertikal stehend ausgerichtet sind.

Eine hiefür geeignete Vorrichtung weist eine Station 2 zum Ritzen der Glastafeln 1 mit einer im wesentlichen vertikal ausgerichteten Stützfläche 25 und einem Förderer 13 am unteren Rand derselben auf. Im Anschluß an die Station 2 ist eine erste 3 und zweite Brechstation 4, in denen nacheinander die X-Traveren geöffnet und vordere Randabschnitte XR abgetrennt werden, vorgesehen. Die so erhaltenen Teile 27 von Glastafeln 1 werden in einer Wandstation 5 um zur Stützfläche 25 senkrechte Achse um 90° gewendet. In einer weiteren Brechstation 8 werden die Y-Traveren gebrochen. Die so erhaltenen Zuschnitte können, nachdem allenfalls vorhandene Randstreifen (XR) und Reststücke R abgetrennt worden sind, unmittelbar in eine Vorrichtung 12 zum Zwischenlagern von Zuschnitten eingeschoben oder einer Isolierglaslinie zugeführt werden.

## Patentansprüche

1. Verfahren zum Teilen von Glastafeln in Zuschnitte, bei dem Glastafeln entsprechend den zu erzeugenden Zuschnitten geritzt und dann gebrochen werden während sie im wesentlichen vertikal stehend ausgerichtet sind, bei dem die Glastafeln zunächst entlang im wesentlichen vertikal ausgerichteter Schnittlinien (X) in Teile (27) gebrochen werden, bei dem die so erhaltenen horizontal verlaufenden Schnittlinien (Y) aufweisenden Teile (27) gewendet werden, um die Schnittlinien (Y) im wesentlichen vertikal auszurichten und bei dem die Teile (27) dann in Zuschnitte zerteilt werden.

2. Verfahren nach Anspruch 1, dadurch gekennzeichnet, daß vom ersten der so erhaltenen Teile (27) entlang des Nullschnittes (OX) ein Randstreifen (XR) abgetrennt wird.

3. Verfahren nach Anspruch 1 oder 2, dadurch gekennzeichnet, daß die geritzten Glastafeln (1) zwischengespeichert werden, bevor sie geteilt werden.

4. Verfahren nach einem der Ansprüche 1 bis 3, dadurch gekennzeichnet, daß die Zuschnitte unmittelbar in Lagergestelle abgestellt werden.

5. Vorrichtung zum Teilen von Glastafeln in Zuschnitte, mit einer Station (2) zum Ritzen von Glastafeln, welche Station (2) eine im wesentlichen vertikal ausgerichtete Stützfläche (25) mit einem Förderer (13) am unteren Rand derselben und einen entlang der Stützfläche (25) verstellbaren Schneidkopf (15) aufweist, und mit Stationen (3, 4, 8, 10) zum Brechen der Glastafeln (1) entlang der vorher erzeugten Ritzlinien (X, Y) in Zuschnitte, dadurch gekennzeichnet, daß die Stationen (3, 4, 8, 10) zum Brechen der Glastafeln bezogen auf die Förderrichtung (Pfeil 26) der Glastafeln durch die Vorrichtung nach der Station (2) zum Ritzen von Glastafeln angeordnet sind und daß zwischen der wenigstens einen ersten Brechstation (3) und der nachfolgenden Brechstation (4, 8, 10) eine Vorrichtung (5) zum Schwenken von Teilen (27) von Glastafeln (1) um 90° vorgesehen ist.

6. Vorrichtung nach Anspruch 5, dadurch gekennzeichnet, daß die Brechstationen (3, 4, 8, 10) beiderseits der Brecheinrichtungen oder -werkzeuge zur Stützfläche (25) der Station (2) zum Ritzen der Glastafeln (1) parallele und mit dieser vorzugsweise fluchtende Stützflächen aufweisen, und daß am unteren Rand der Stützflächen eine Fördereinrichtung (13) vorgesehen ist.

7. Vorrichtung nach Anspruch 5 oder 6, dadurch gekennzeichnet, daß die erste Brechstation (3) eine quer zur Stützfläche (25) verstellbare Brechleiste (7) und beiderseits derselben Niederhalter, beispielsweise in Form von Saugern (20) aufweist.

8. Vorrichtung nach einem der Ansprüche 5 bis 7, dadurch gekennzeichnet, daß die weitere Brechstation (4, 8, 10) ein Brechwerkzeug (30) mit einem von der der Ritzlinie gegenüberliegenden Seite her an die Teile (27) von Glastafeln (1) anlegbaren Widerlager (41) und mit zwei von der gegenüberliegenden Seite her an die Teile (27) von Glastafeln (1) anlegbaren Gegenhaltern (40) aufweist, wobei der Abstand der Gegenhalter (40) vom Widerlager (41) beim Ausführen des Brechens verkleinerbar ist.

9. Vorrichtung nach Anspruch 7 oder 8, dadurch gekennzeichnet, daß die Niederhalter (20) und die Brechwerkzeuge (30) im Bereich der Fördereinrichtung (13) vorgesehen sind.

10. Vorrichtung nach einem der Ansprüche 5 bis 9, dadurch gekennzeichnet, daß die Station (5, 9) zum Schwenken von Teilen von Glastafeln (1) oder Zuschnitten einen um eine senkrecht zur Stützfläche (25) verschwenkbaren, die Teile (27) oder die Zuschnitte erfassenden Greifer (16) aufweist.

11. Vorrichtung nach Anspruch 10, dadurch gekennzeichnet, daß der Greifer (16) um eine in der Höhe der Fördereinrichtung (13), insbesondere in der Höhe der Oberkante derselben, liegende Achse verschwenkbar ist.

## Claims

1. A method of dividing glass panes into sections, in which glass panes are scored in accordance with the sections to be produced and are then broken while they are standing substantially vertically, in which the glass panes are firstly broken into pieces (27) along substantially vertical cutting lines (X), wherein the pieces (27) thus obtained and having horizontally running cutting lines (Y) are turned to that the cutting lines (Y) run substantially vertically and wherein the pieces (27) are then divided up into sections.

2. A method according to claim 1, characterized in that an edge strip (XR) is separated from the first of the pieces (27) thus obtained along the origin cut (OX).

3. A method according to claim 1 or 2, characterized in that the scored glass panes (1) are stored in the interim, before they are divided up.

4. A method according to any of claims 1 to 4, characterized in that the sections are placed directly in storage locations.

5. Apparatus for dividing glass panes into sections, with a station (2) for scoring glass panes, which station (2) comprises a substantially vertical support surface (25) with a conveyor (13) at the lower edge thereof and a cutter head (15) adjustable along the support surface (25), and with stations (3, 4, 8, 10) for breaking the glass panes (1) along the previously formed score lines (X, Y) into sections, characterized in that the stations (3, 4, 8, 10) for breaking the glass panes are arranged after the station (2) for scoring the glass panes in relation to the feed direction (arrow 26) of the glass panes through the apparatus and in that a device (5) for turning pieces (27) of glass panes (1) through 90° is provided between the at least one first breaking station (3) and the following breaking stations (4, 8, 10).

6. Apparatus according to claim 5, characterized in that the breaking stations (3, 4, 8, 10) comprise support surfaces on both sides of the breaking devices or tools, parallel to the support surface (25) of the station (2) for scoring the glass panes (1) and preferably in alignment therewith, and in that a conveyor device (13) is provided at the lower edge of the support surfaces.

7. Apparatus according to claim 5 or 6, characterized in that the first breaking station (3) comprises a breaking strip (7) movable transverse to the support surface and holddown members on the two sides thereof, for example in the form of suckers (20).

8. Apparatus according to any of claims 5 to 7, characterized in that the further breaking station (4, 8, 10) comprise a breaking tool (30) with an abutment (41) applicable to the pieces (27) of glass panes (1) from the side opposite the score lines and two supports (40) applicable from the opposite side to the pieces (27) of glass panes (1), wherein the distance of the supports (40) from the abutment (41) can be reduced in effecting the breaking.

9. Apparatus according to claim 7 or 8, characterized in that the hold-down members (20) and the breaking tools (30) are provided in the region of the conveyor device (13).

10. Apparatus according to any of claims 5 to 9, characterized in that the station (5, 9) for turning pieces of glass panes (1) or sections comprises a gripper (16) for grasping the pieces (27) or the sections and which can turn about an axis perpendicular to the support surface (25).

11. Apparatus according to claim 10, characterized in that the gripper (16) can turn about an axis lying at the level of the conveyor device (13), especially at the level of the upper edge thereof.

## Revendications

1. Procédé pour diviser des panneaux de verre en coupes, dans lequel on raye des panneaux de verre en fonction des coupes à produire et on les sépare alors qu'ils sont dressés essentiellement en position verticale, dans lequel on sépare les panneaux de verre tout d'abord suivant des lignes de coupe (X) essentiellement verticales pour former des bandes (27), dans lequel on tourne les bandes (27) ainsi formées, pourvues de lignes de coupe (Y) horizontales, aux fins d'amener lesdites lignes de coupe (Y) dans une position essentiellement verticale et dans lequel on sépare ensuite les bandes (27) pour former des coupes.

2. Procédé selon la revendication 1, caractérisé par le fait que l'on retire de la première bande (27) ainsi obtenue une bande de bord (XR), le long d'une ligne de coupe zéro (OX).

3. Procédé selon la revendication 1 ou 2, caractérisé par le fait que l'on stocke temporairement les panneaux de verre (1) rayés avant de les séparer.

4. Procédé selon une des revendications 1 à 3, caractérisé par le fait que l'on dépose les coupes directement dans des râteliers.

5. Dispositif pour diviser des panneaux de verre en coupes, avec un poste (2) pour rayer les panneaux de verre, lequel poste (2) présente une surface d'appui (25) essentiellement verticale, avec un transporteur (13) au niveau du bord inférieur de celle-ci et une tête de coupe (15) qui peut être déplacée le long de la surface d'appui (25) et avec des postes (3, 4, 8, 10) pour séparer les panneaux de verre (1) en coupes, le long de lignes de coupe (X, Y) préalablement tracées, caractérisé par le fait que les postes (3, 4, 8, 10) pour séparer les panneaux de verre, par rapport à la direction de transport (flèche 26) des panneaux de verre dans le dispositif, sont disposés après le poste (2) pour rayer les panneaux de verre et par le fait qu'il est prévu entre le premier poste de séparation (3), au nombre d'au moins un, et le poste de séparation (4, 8, 10) suivant, un dispositif (5) pour tourner de 90°les bandes (27) de panneau de verre (1).

6. Dispositif selon la revendication 5, caractérisé par le fait qu'il comporte, dans les postes de séparation (3, 4, 8, 10), de part et d'autre des dispositifs ou des outils de séparation, des surfaces d'appui qui sont parallèles à la surface d'appui (25) du poste (2) pour rayer les panneaux de verre (1) et sont de préférence alignées avec celles-ci et par le fait qu'un dispositif de transport (13) est prévu au niveau du bord inférieur des surfaces d'appui.

7. Dispositif selon la revendication 5 ou 6, caractérisé par le fait que le premier poste de séparation (3) comporte une règle de séparation (7) qui peut être déplacée transversalement à la surface d'appui (25) et, de part et d'autre de celle-ci, des moyens presseurs, par exemple sous la forme de ventouses (20).

8. Dispositif selon une des revendications 5 à 7, caractérisé par le fait que le poste de séparation supplémentaire (4, 8, 10) comporte un outil de séparation (30) avec un contre-appui (41) qui peut être appliqué contre les bandes (27) de panneau de verre (1) sur la face opposée à la ligne de coupe et deux appuis (40) qui sont appliqués sur les bandes (27) de panneau de verre, sur la face opposée, la distance entre les appuis (40) et le contre-appui (41) pouvant être réduite pour la séparation.

9. Dispositif selon la revendication 7 ou 8, caractérisé par le fait que les moyens presseurs (20) et les outils de séparation (30) sont prévus dans la région du dispositif de transport (13).

10. Dispositif selon une des revendications 5 à 9, caractérisé par le fait que le poste (5, 9) pour tourner les bandes de panneau de verre (1) ou les coupes comporte un moyen de préhension (16) qui pivote autour d'un axe perpendiculaire à la surface d'appui (25) et saisit les bandes (27) ou les coupes.

11. Dispositif selon la revendication 10, caractérisé par le fait que le moyen de préhension (16) peut pivoter autour d'un axe situé à la hauteur du dispositif de transport (13), notamment à la hauteur du bord supérieur de celui-ci.
